Europäisches Patentamt

(19) European Patent Office

Office européen des brevets

(11) Publication number: **0 156 933**

**B1**

(12) **EUROPEAN PATENT SPECIFICATION**

(45) Date of publication of patent specification: **19.11.87**

(21) Application number: **84103608.0**

(22) Date of filing: **02.04.84**

(51) Int. Cl.⁴: **F 02 K 3/075,** F 02 K 3/02, F 02 C 6/20

(54) **Turboprop engine.**

(43) Date of publication of application:
**09.10.85 Bulletin 85/41**

(45) Publication of the grant of the patent:
**19.11.87 Bulletin 87/47**

(84) Designated Contracting States:
**DE FR GB IT**

(56) References cited:
**FR-A-2 185 758
FR-A-2 207 244
FR-A-2 243 330
FR-A-2 355 169
GB-A- 627 832
GB-A-2 005 356
GB-A-2 100 799
US-A-3 779 282
US-A-3 854 286
US-A-3 972 349
US-A-4 052 845**

(73) Proprietor: **THE BOEING COMPANY**
**P.O. Box 3707**
**Orgn. 6-1141, M/S 24-15 Seattle, WA 98124 (US)**

(72) Inventor: **Klees, Gary William**
**9130 SE 72 Place**
**Mercer Island, WA 98040 (US)**
Inventor: **Johnson, Paul E.**
**4047 W. Mercer Way**
**Mercer Island WA 98040 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

Courier Press, Leamington Spa, England.

## Description

The present invention relates to a turboprop engine as defined in the precharacterizing part of claim 1.

Such a turboprop engine is known from GB—A—2 100 799. This known turboprop engine is in fact a turbofan engine provided with a propeller. In this regard the fan is seen as the first compressor part as mentioned in the introductory part of the main claim. With this known turboprop-turbofan engine an optimization of the operation under cruise conditions as well as during take-off and climb is intended.

It is an object of the present invention to provide a turboprop engine with which problems connected to optimization of the engine operation at different conditions, are further alleviated.

This object is achieved with a turboprop engine according to the invention as characterized in the main claim. The engine according to the invention can be operated during take-off mode of operation with the flow control means in the first position to produce thrust from air flow through the air outlet bypass duct means. During the cruise mode, the flow control means is moved to the second position to direct air flow from the first compressor part of the second, higher pressure compressor part. In this way the turboprop engine according to the invention can be accurately designed for optimum performance in both conditions.

A flow control device adapted to be used as flow control means according to the characterizing part of the claim is known as such from US—A—3 779 282. This flow control device known as such, is also shown and described in the description of preferred embodiments of the invention hereinafter. From this description also further features of the present invention will become apparent.

Figure 1A is a semi-schematic side elevational view of a first embodiment of the present invention, showing certain of the engine components in section, and with the flow control system being shown in it's flow inverting position;

Figure 1B is essentially the same view as in Figure 1A, but with the flow control system being in its non-inverting position;

Figure 2 is an isometric view of the flow control apparatus utilized in the present invention;

Figure 3 is a detailed isometric view of one of the basic duct elements used in the flow control device of Figure 2;

Figure 4 is an exploded view of two individual adjacent duct means each comprising a pair of mated basic duct elements;

Figure 5 is an isometric view of four adjacent duct means each comprising forward and aft basic duct elements aligned for flow inversion;

Figure 6 corresponds to Figure 5 with the forward and aft elements shifted and realigned for straight-through flow;

Figure 7 is similar to Figure 6 except that each pair of basic duct elements has been shifted and mated for straight-through flow;

Figures 8a through 8d are cross-sectional views through the duct means of Figures 4 and 7, taken as noted thereon;

Figure 9 is a semi-schematic view, similar to Figure 1, of a second embodiment of the present invention;

Figure 10 is a view similar to Figures 1 and 9 showing yet a third embodiment of the present invention; and

Figure 11 is a view similar to Figures 1, 9, and 10, showing a fourth embodiment of the present invention where a dual propeller is mounted at the aft end of the engine.

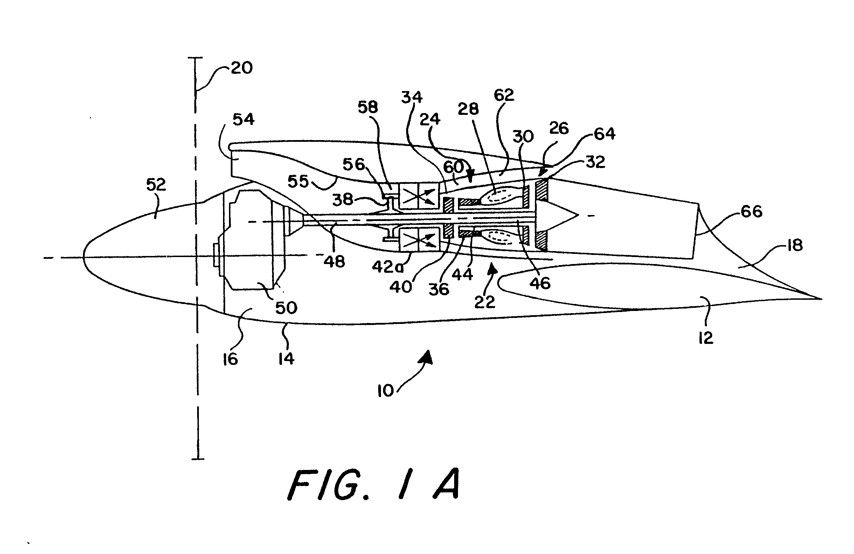

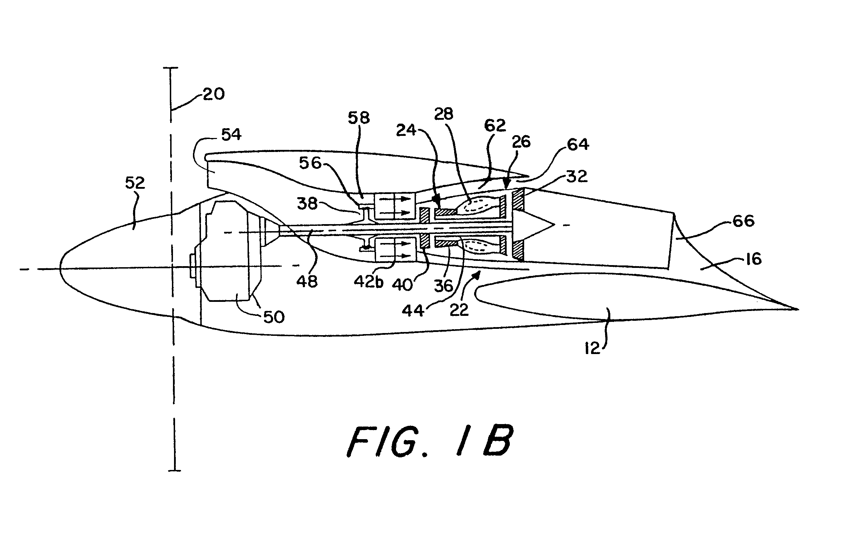

In Figure 1 there is a schematic showing of a first embodiment of the present invention. The engine 10 of the present invention is mounted above and forwardly of a wing 12 and comprises a hosing 14 having a forward end 16 and an exhaust end 18. Rotatably mounted to the forward end of the engine 10 is a variable pitch propeller 20.

Positioned rearwardly of the propeller 20 is a core engine 22 having a compressor 24, a turbine 26 and a combustion section 28 positioned between the compressor 24 and turbine 26. The turbine 26 has a first stage 30 and a second stage 32, and the compressor has a first forward low pressure section 34 and a second rear high pressure section 36. The forward compressor section 34 comprises forward and rear compressor portions 38 and 40, respectively, spaced axially from one another and having a flow control device 42 positioned therebetween. The operation of this flow control device 42 in conjunction with the other components is quite significant in the present invention and will be described in more detail later herein.

The turbine first stage 30 is connected through an outer shaft 44 to the high pressure compressor section 36, and the turbine second stage 32 is connected through an inner shaft 46 to the forward and rear portions 38 and 40 of the forward compressor section 34. Also, the inner shaft 46 extends forwardly at 48 to connect to a speed reducing transmission 50 which drives the propeller 20 at a rotational speed slower than that of the turbine second stage 32. In addition, the propeller 20 is provided with positioning means 52 which can be operated to change the pitch of the blades of the propeller 20. Since the transmission 50 and positioning means 52 are or may be of conventional design, they will not be described in detail herein.

Located immediately behind the propeller 20 just above the transmission 50 is a main air inlet 54 which leads to the forward intake end of the compressor 24. Extending rearwardly from the inlet 54 is an inwardly facing surface 55 which defines a main through passageway. There is an annular wall 56 which surrounds the forward portion 38 of the forward compressor section 34 and is spaced inwardly of the surface 55. This wall 56 forms with the surface 55 an outer annular air inlet duct 58 which surrounds the forward compressor portion and is immediately forward of the flow control device 42. Located immediately rearwardly of the flow control device 42 is a second annular wall 60 which extends around the second rear compressor portion 40, the rear high pressure compressor section 36, the combustion section 28 and the turbine 26. This annular wall 60 forms with the surface 55 an annular bypass duct 62 which terminates in a rear nozzle 64. The gaseous exhaust from the turbine 26 exhausts through a rear central nozzle 66.

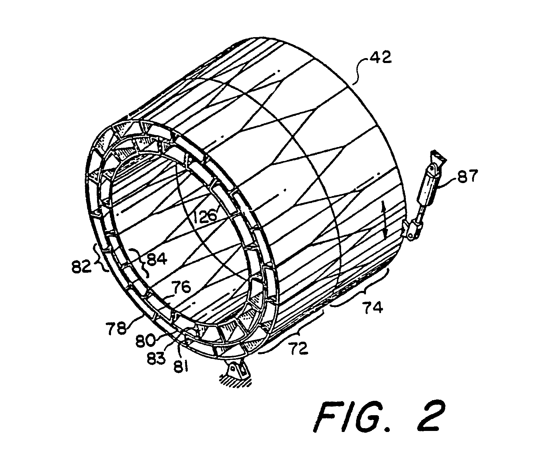

With respect to the flow control device 42, it will first be described functionally with reference to Figures 1A and 1B, after which the specific configuration of the preferred embodiment of this device 42 will be described with respect to Figures 2 through 8.

The flow control device 42 has two operating positions, namely a first inverted position 42a illustrated in Figure 1A and a second non-inverted position shown at 42b in Figure 1B. The flow control device 42 is moved to the first flow inverting position 42a during the take-off and climb mode, and then moved to the non-inverted position 42b for the cruise mode. The manner in which this contributes to the improved performance of the engine will be discussed later herein.

The preferred configuration of the flow control valve 42 is described in some detail in U.S. Patent 3,792,584, so only the main features of this device 42 will be described herein. Reference is first made to Figure 2, where it can be seen that the valve 42 is sectioned into relatively movable forward and aft portions 72 and 74, each bounded by an inner side 76 and an outer side 78 of an annular passageway. At the entrance of the device 42 (near side as shown), center wall structure 80 separates the passageway into a first duct means 82 having an annular entrance configuration and a second duct means 84 having an annular configuration concentric with, and inside of, the first duct means 82. Each of the first and second duct means 82 and 84 are divided into a plurality of individual basic duct elements 86. For purposes of illustration, circumferentially adjacent duct elements 86 are shown to be separated by radial walls 81 and 83 at the valve entrance plane. However, since the two basic separated flow patterns being controlled by the first and second duct means 82 and 84 are annular, the flow will naturally divide between circumferentially adjacent duct elements, and, therefore, in most practical embodiments, radial entrance (or exit) walls such as 81 and 83 will not be necessary or desirable. An actuator means 87 in combination with the fixed pin restraint shown provides a means for causing relative rotation of the aft portion 74 with respect to the forward portion 72.

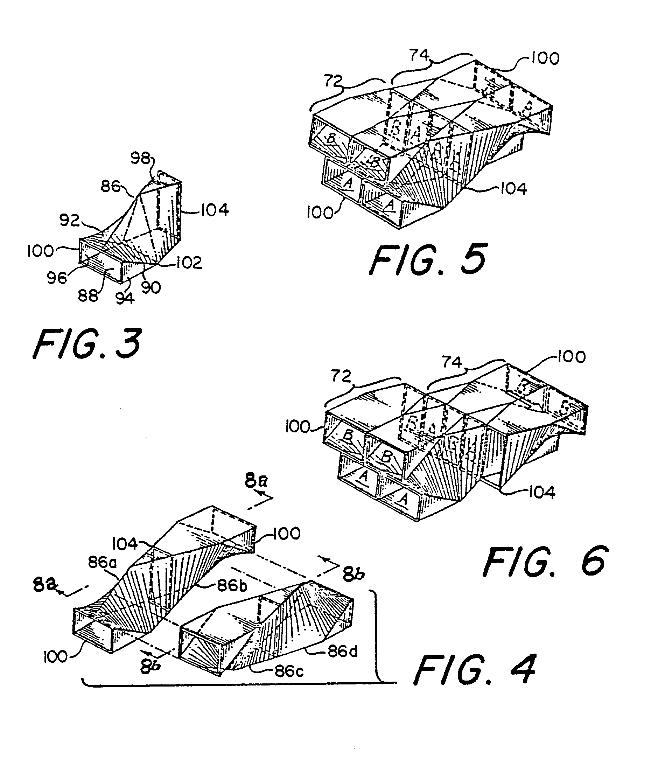

The basic duct element 86 is shown isolated in Figure 3. For purpose of simplicity in describing the device 42, the duct elements 86 are shown to resemble individual building blocks, each having its own exterior wall structure. However, it will be readily understood that this is for purposes of illustration only, and in the present embodiment, adjacent duct elements will utilize single and common walls. Also, it will be noted that Figures 3 through 8 each show duct elements having straight line segments, or segments having an infinite annular radius, for ease of illustration. However, these contours could be varied to some degree. Further, for ease of illustration, in Figures 3 through 8, the elements 86 have not been shown with the overall curved configuration as shown in Figure 2, where the elements 86 are shown as curved segments to fit collectively into an annular configuration.

As shown in Figure 3, the basic duct element 86 can be seen to have a first wall surface 88; opposite facing symmetrically disposed second wall surfaces 90, 92 and third wall surfaces 94, 96; and an opposite wall surface 98. The duct element 86 defines at the entrance and (near side), a generally rectangular section 100 having one of its long sides formed by the first wall surface 88 and extending partially across the total passageway in a direction perpendicular to the first wall surface 88. The basic duct element 86 maintains a constant duct area along its length, and the wall surfaces 90, 92 provide a smooth gradual transition from the entrance rectangular section 100 to an intermediate triangular section 102, and then to a general rectangular section 104 which extends vertically across the passageway at the opposite end of the basic duct element 86. The first wall surface 88 is normally a wall segment of the total passageway and forms a long side of rectangular section 100, one side triangular section 102, and a short sided of rectangular section 104 at the opposite end of the duct element 86. The smooth gradual transition between each of the defined sections has been accomplished by shaping the second wall surface 90, 92 to create a uniformly varying curvature for the walls of the passageway.

Figure 4 is an exploded isometric view of two adjacent individual duct means each comprising a mated pair of basic duct elements 86 of the type shown in Figure 3. Basic duct element 86a is identically disposed to the Figure 3 element 86 and joined at its rectangular section 104 to a second element 86b which has been rotated and inverted from the Figure 3 position. It will be readily apparent that flow entering rectangular section 100 of duct element 86a will be communicated through the mated rectangular sections 104 into duct element 86b and hence out of rectangular section 100 at the opposite end of the element 86b. Accordingly, when the duct system 86a, 86b is installed in a fluid passageway, the flow will be forced to enter a rectangular section extending partially across the passageway, passed through a rectangular section extending entirely across the passageway, and exit through a rectangular section which extends partially across the passageway from the opposite side of the passageway from that of the entrance end. In this manner, a first duct means is provided for inverting flow from the lower to the upper side of the passageway.

In a similar fashion in Figure 4 adjacent elements 86c and 86d are mated together but rotated longitudinally so that they will conformably nest with elements 86a and 86b while providing a constant area second duct means for inverting flow from the upper to the lower side of the passageway.

Figure 5 shows a nested cluster of duct means of a type shown in individual detail in Figure 4, conveniently sectioned into relatively movable forward and aft portions 72 and 74 which interface at the intermediate rectangular section 104. With the forward and aft portions positioned as shown, flow inversion will take place. A first duct means A is located at the entrance end of the passageway adjacent to and below a second duct means B. As has been previously discussed, each of the duct means will receive flow at the entrance end from one side of the passageway and communicated to the opposite side at the exit end.

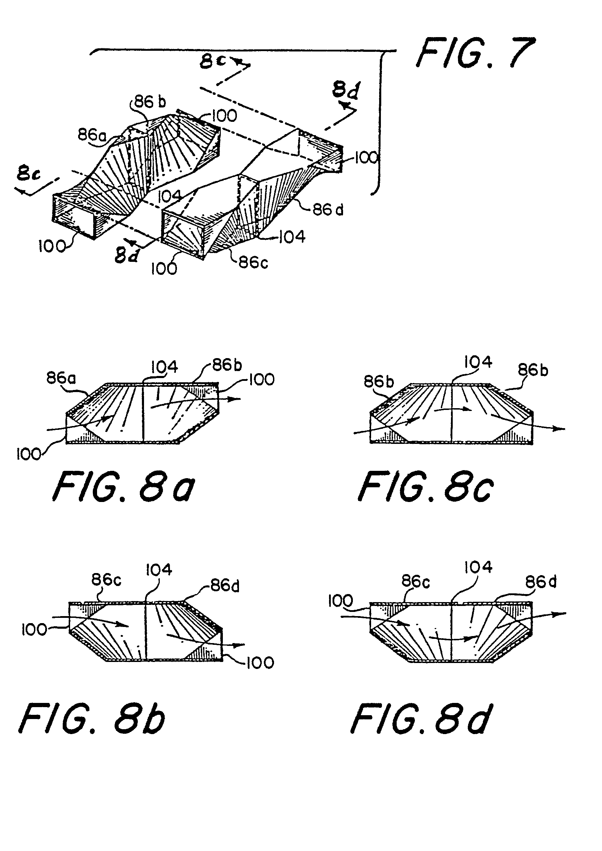

Figure 6 shows the system of Figure 5, wherein the relatively movable portions 72 and 74 have been displaced such that next adjacent sections 104 have been aligned to form new duct means which will pass the flow straight through the passageway between entrance cross sections and exit cross sections which are similarly disposed on the same side of the passageway. Accordingly, a simple mechanical device for circumferentially displacing either the forward or aft portion 72 or 74 will provide means for switching from inverted to straight-through flow. The relative positions of the basic duct elements 86 for the straight-through mode of operation are displayed more clearly in Figure 7.

Figure 7 shows a pair of basic duct elements 86a and 86b mated at the rectangular sections 104 to form a duct means which receives flow from the lower entrance 100, communicates it through element 86b and out of the passageway through an exit section 100 located at the same side of the passageway. Similarly, the adjacent duct means formed by the mated elements 86c and 86d directs flow received from an upper entrance section 100 out of the passageway through an upper exit section 100 located on the same side of the passageway as that of the entrance section. Figures 8a, 8b, 8c, and 8d are cross sectional views taken as designated in Figures 4 and 7. Figures 8a and 8b illustrate the flow paths for the individual next adjacent duct means of Figure 4 when the system is used for flow inversion as in Figure 1A. Figures 8c and 8d illustrate flow paths for straight-through flow when the device 42 is in its non-inverted position, such as is shown in Figure 1B.

The flow control device 42 is so arranged relative to the annular walls 56 and 58 so that the rear edge of the annular wall 56 is closely adjacent the middle wall 80 of the device 42 and the forward edge of the rear annular wall 60 is closely adjacent to the rear edge of the middle annular wall 80 of the flow control device 42. Thus, the flow through the inlet duct 58 leads directly into the outer set of intake openings 100. The flow from the forward portion 38 of the forward compressor section 34 leads directly into the inner annular set of openings 100. The rear outer outlet openings 100 of the device 42 lead directly into the bypass duct 62, while the inner set of outlet openings 100 lead directly into the rear portion 40 of the forward compressor section 34. Thus, with the flow control device 42 in the inverting position 42a (as shown in Figures 4 and 5), the flow from the inlet duct 58 is inverted radially inwardly to pass through the rear portion 40 of the forward compressor section 34, and flow from the forward portion 38 of the forward compressor section 34 is diverted radially outwardly to pass into the bypass duct 62. With the flow control device 42 in the non-inverting position 42b, the flow into the inlet duct 58 passes directly through the flow control device 42 into the bypass duct 62, while the flow from the forward compressor portion 38 passes straight through to the rear compressor portion 40 of the forward compressor section 34.

To describe the operation of the present invention, consideration is given first to the operation of the engine 10 during take-off and climb. In this operating mode, the propeller 20 is set at a relatively shallow pitch, and the flow control device 42 is moved to the inverting position 42a (as shown in Figures 4 and 5). Thus, the flow from the forward compressor portion 38 is directed through the bypass duct 62 and out the nozzle 64 to create a thrust. The flow through the inlet duct 58 is directed inwardly to pass through the rear portion 40 of the forward compressor section 34 and thence through the second high pressure compressor section 36, and thence to the combustion section 28. The gaseous flow from the combustion section 28 then passes through the two turbine stages 30 and 32 and thence out the central nozzle 66.

The power developed by the second turbine stage can be considered as being divided into three parts. There is a first part which delivers power to the rear portion 40 of the forward compression section 34 to compress the inlet air that is directed to the high pressure compressor section 36. There is a second part of the power from the second turbine stage 32 which drives the forward compressor portion 38 to provide the air flow that passes through the bypass duct 62, this air flow being translated directly into thrust. The third part of the power from the second turbine stage 32 is used to act through the speed reducing transmission 50 to drive the propeller 20.

It is apparent that in the position 42a for take-off and climb the rear portion 40 of the forward compressor section 34 and the second high power compressor section 36 collectively form the total compressor for the core engine 22 in the take-off and climb mode of operation. At the same time, the forward portion 38 of the forward compressor section 34 is in effect a fan which provides thrust by acting directly on the air stream. Since the thrust requirements for a typical airplane are greater during the take-off and climb, some of the burden that would otherwise be placed totally on the propeller 20 to provide this thrust is alleviated by the forward compressor portion 38 producing a portion of this thrust. This in turn reduces the maximum power requirements on the transmission 50. The rear compressor portion 40 and the second high pressure compressor section 36 are sized and arranged to match the power requirements of the two turbine stages 30 and 32 for conditions at take-off and climb (which would normally be higher ambient air pressure and temperature then would be encountered in comparison with the cruise mode which would take place at higher elevations). This differs from throttling-back the engine (by controlling or adjusting the fuel-air ratio as in a normal engine) because the gas generator (and power turbine section) are deprived of full mass flow and pressure by shunting off the front compressor 38. This effect is similar to "desupercharging" the engine. This technique allows the engine to operate at close to its design speed and efficiency, thus eliminating the losses that would normally occur when the engine speed reduces as it is throttled-back.

When the aircraft on which the engine 10 is mounted is in the climb mode, the flow control device 42 is moved to its non-inverted position 42b, with the result that the flow from the forward portion 38 of the forward compressor section 34 passes directly through the rear compressor portion 40 and the second high pressure section 36, thus increasing the power available from the turbine stages 30 and 32 because of the increased mass flow and pressure that is made available from the supercharging effect of the front compressor 38. During this time, the propeller 20 is gradually shifted to a steeper pitch which would cause more efficient operation during the cruise mode. Thus, the flow into the inlet duct 58 simply passes through the bypass duct 62 and out the nozzle 64. The forward compressor portion 38 is so sized and arranged relative to the rear portion of the low pressure section 34 and the high pressure section 36 that in the non-inverted position the forward and rear portions 38 and 40 and the rear high pressure section 36 collectively match the power requirements of the two turbine stages 30 and 32 for conditions at cruise (which would normally be lower ambient pressure and temperature that would be encountered in comparison with the take-off and climb mode).

Therefore, in terms of function, it can be seen that the rear portion 40 of the low pressure compressor section 34 and the high pressure compressor section 36 collectively form a second compressor component which can be considered as a core engine compressor component which directs compressed air to the combustion section 26 both in the first take-off and climb mode and also in the second cruise mode. The forward compressor portion 38 of the low pressure compressor section 34 can, in terms of function, be considered as a first compressor component which functions in the take-off and climb mode as a fan member to act on the air stream to provide thrust in the form of air flow through the bypass duct 62. In the cruise mode, the first compressor component functions to compress air flow and feed it directly to the second compressor component (i.e. the combination of the second compressor portion 40 and the rear high pressure compressor section 36).

The inlet 58 can be considered as having an active and a passive mode. The active mode occurs during take-off and climb, where air flow from the inlet 58 is directed through the flow control device 42 to supply air to the second compressor component (i.e. the combination of the second compressor portion 40 and the rear high pressure section 36). The passive mode for the inlet 58 occurs during cruise, where the flow into the inlet 58 simply passes through the device 42 and the bypass duct 62 to pass out the rear duct nozzle 64.

Also, the bypass duct 64 can be considered to have an active and a passive mode. The active mode occurs during take-off and climb, when the duct 62 receives airflow from the first compressor component (i.e. the forward portion 38 of the low pressure section 34) and exhaust this flow through the duct nozzle 64 to provide a thrust. The passive mode occurs during cruise when the duct receives the flow from the inlet 58 and through the device 42 to pass out the outlet 64.

With regard to the matching of the various parts of the engine 10, the compression ratio of the second compressor component (i.e. the compressor component located downstream of the flow control device 42, which in the present embodiment is the rear portion 40 of the low pressure section 34 and the high pressure section 36) would be between about 20 to one and 30 to one during the take-off and climb mode. In this same take-off and climb mode, the compression ratio of the first compressor component (which in the present embodiment is the forward portion 38 of the low pressure compressor section 34) would be about 1.4 to one and 2.0 to one. In the cruise mode, where the flow from the forward compressor portion 38 flows through the flow control device 42 directly into the compressor portion 40, the total compression ratio of the entire compressor (i.e. made up of both low pressure compressor portions 38 and 40 and the high pressure section 36) would be between about 30 to one and 40 to one for the cruise mode of operation.

The bypass ratio of the propeller relative to the core engine 20, when operating in the cruise mode, would normally be about 80. When the engine 10 is operating in the take-off and climb mode, the bypass ratio of the flow through the bypass duct 62 relative to the flow into the core engine 20 would be between about 0.5 to 1.0.

Further, the inner annular wall 56 would normally be arranged relative to the outer annular surface 55 so that the frontal area of the intake 58 would be about 60% of the frontal area of the forward portion 38 of the low pressure compressor section 34.

The relative values given in the three paragraphs immediately above would normally be applicable to a turboprop engine designed to cruise between Mach 0,7 and 0,8 at an elevation of between 10.000 to 12.500 m (30.000 to 40.000 feet). Such an engine would be expected to develop power between 6000 and 9000 kW (8000 and 12.000 hp) during take-off and climb, and 3750 and 5250 kW (5000 to 7000 hp) during the cruise mode. During take-off and climb, the power absorbed by the forward compressor portion 38 (which is transmitted directly into thrust by developing air flow through the bypass passageway 62) would be expected to be between about 60 and 100% of the power absorbed by the propeller 20.

It is to be understood that the values given above are generally the preferred relationships of these components. However, within the broader aspects of the present invention, these ranges could be broadened.

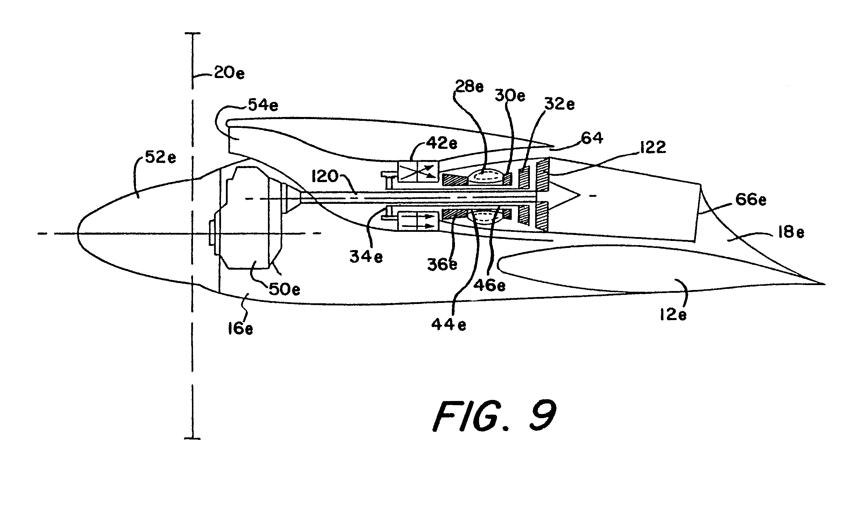

Figure 9 shows a second embodiment of the present invention. Components of this second embodiment which are similar to components of the first embodiment will be given like numerical designations, with an "e" suffix distinguishing those of the second embodiment. This second embodiment differs from the first embodiment of Figures 1A and 1B in that there is a third shaft 120 driven by a third turbine stage 122.

The shaft 120 is mounted within the shaft 46e and is connected to the speed reducing transmission 50e. The third turbine stage 122 is positioned directly behind the second turbine stage 32e, and it acts through the shaft 120 to supply power to the propeller 20e. Also, the compressor first section 34e is positioned entirely forwardly of its flow control device 42e.

The mode of operation of this second embodiment in Figure 9 is substantially the same as that of the first embodiment shown in Figures 1A and 1B, so no detailed description of the operation of the second embodiment will be contained herein. Further, since most all of the components of the second embodiment in Figure 9 are substantially the same as those of Figures 1A and 1B, except for those specifically identified above as being added to the second embodiment, no further description of those components will be contained herein.

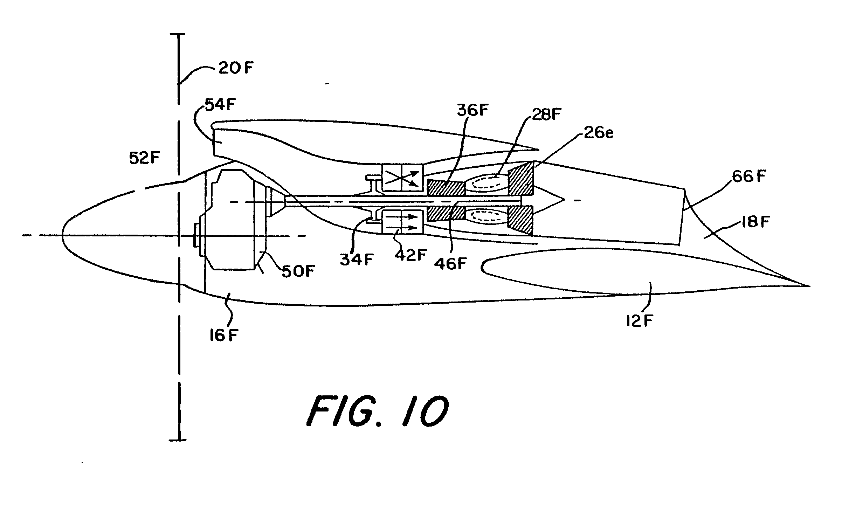

A third embodiment of the present invention is shown in Figure 10. Components of this third embodiment which are similar to components of the first embodiment of Figures 1A and 1B will be given like numerical designation, with an "f" suffixed distinguishing those in the third embodiment.

This third embodiment is quite similar to the first embodiment, except that the entire low pressure compressor section 34f is positioned forwardly of the flow control device 42f. Thus, the second compressor component (i.e. that portion of the compressor 24f which functions to provide bypass flow as thrust during the take-off and climb mode) and the high pressure compressor component 36f (i.e. that portion of the compressor 24f which during both operating modes compresses air which is fed directly to the combustion section 28f) are mounted to the same shaft 46f. In other respects, it is believed that an understanding of the various parts of the engine and their function are readily understandable from the above description of the embodiment, so no further description of this third embodiment will be contained herein.

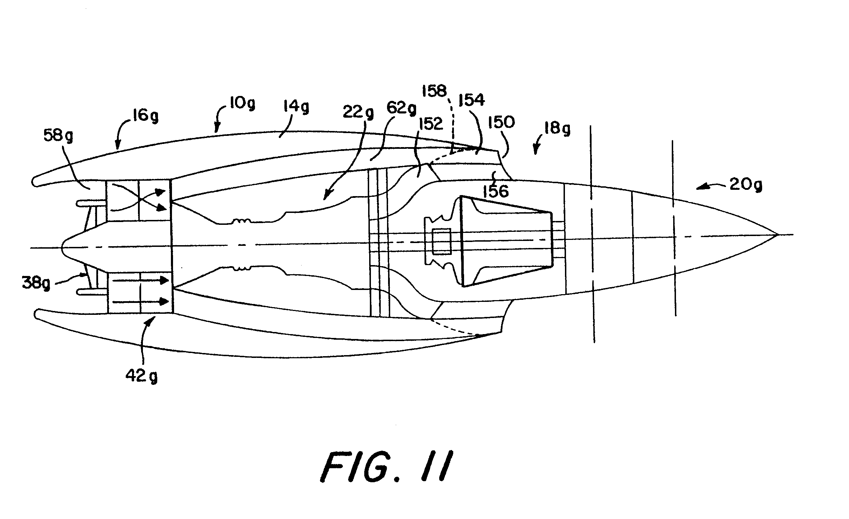

A fourth embodiment of the present invention is shown in Figure 11. Components of this fourth embodiment which are substantially similar to those in the other embodiments will be given like numerical designations, with a "g" suffixed distinguishing those of this fourth embodiment.

The engine 10g of this fourth embodiment comprises a housing 14g having a forward end 16g and an exhaust end 18g. A variable pitch dual propeller 20g having counter rotating blades is mounted at the aft end of the engine 10g.

The core engine is indicated schematically at 22g, and it is to be understood that this core engine 22g comprises a compressor, turbine, and combustion section as in the previous embodiments. The flow control device 42g is positioned at a location forwardly of the core engine 22g, and the low pressure compressor component 38g is located forwardly of the flow control device 42g.

The bypass duct 62g terminates at an outlet section 150. The gaseous exhaust from the core engine passes through rearwardly and radially outwardly extending duct means 152 toward the outlet 150. In one configuration, the flow through the bypass duct 62g can pass through an outer annular duct portion 154, and the flow from the gaseous exhaust duct means 152 can exit through an inner annular outlet portion 156. Alternatively, the flow from the bypass duct 62g and from the duct means 152 can be mixed at the outlet 150, this function being indicated schematically by the broken line at 158.

The flow from the outlet at 150 passes through the inner portion of the path of the propeller 20g. If the flow through the duct 62g and the duct means 152 is mixed at the outlet 150, this would produce a combined flow of an intermediate temperature, and this may be advantageous if it is desired to keep the temperature of the gaseous flow through the propeller area below a certain level.

## Claims

1. A turboprop engine comprising:

a compressor (24) having a first compressor part (38; 34) and a second compressor part (40+36; 36) downstream thereof;

a turbine (26) operatively connected through drive means to said compressor (24);

a combustion section (28) arranged to receive air flow from the compressor (24) and burn fuel therein to provide a gaseous flow to drive the turbine (26);

a variable pitch propeller (20) rotatably mounted and positioned to react against ambient air to produce a thrust;

a speed reducing transmission (50) operatively connected between said turbine (26) and said propeller (20) to drive said propeller at a reduced rotational speed relative to the turbine;

air inlet means (54) to direct air flow into said engine; air outlet bypass duct means (62) arranged to provide air flow that bypasses the second compressor part (40+36; 36), combustion section (28) and the turbine (26); characterized by

air inlet bypass means (58) arranged to provide a bypass inlet air flow that bypasses said first compressor part (38; 34);

flow control means (42) operatively positioned to receive air flow from said air inlet bypass means (58) and air flow from said first compressor part (38; 34), and to direct air flow to said air outlet bypass duct means (62) and air flow to said second compressor part (40+36; 36), said flow control means (42) having a first position where air flow from said air inlet bypass means (58) is directed to said second compressor part (40+36; 36) and air flow from said first compressor part (38; 34) is directed to said air outlet bypass duct means (62), and a second position where air flow from the air inlet bypass duct means (58) is directed to the air outlet bypass duct means (62) and air from the first compressor part (38; 34) is directed to the second compressor part (40+36; 36).

2. Engine according to claim 1, characterized in that there are first and second turbine stages (30, 32) and first and second compressor sections (34, 36) operatively connected to said second (32) and first (30) turbine stages, respectively, said first compressor section (34) having forward (38) and rear (40) portions, said flow control means (42a) being operatively positioned between the forward and rear portions of the first compressor section (34), whereby said forward compressor portion (38) comprises said first compressor part and said rear compressor portion (40) together with said second compressor section (36) comprises said second compressor part.

3. Engine according to claim 1, characterized in that there are first and second turbine stages (30, 32) and first and second compressor sections (34, 36) operatively connected to, respectively, said second (32) and first (30) turbine stages, said flow control means (42b) being operatively positioned between said first and second compressor sections (34, 36).

4. Engine according to claim 3, characterized in that there is a third turbine stage (122) operatively connected to said speed reducing transmission (50e).

5. Engine according to claim 1, characterized in that said turbine (26) is operatively connected to said compressor (24) through a single drive connection, and said first and second compressor parts are both driven directly from said drive connection.

6. Engine according to claim 1, characterized in that said propeller (20) is mounted forwardly of said air inlet means (54), and a portion of air flow from said propeller passes into said air inlet means.

7. Engine accordng to claim 1, characterized in that said propeller (20g) is mounted rearwardly of said turbine, and said speed reducing transmission is positioned rearwardly of said turbine (Fig. 11).

8. Engine according to claim 7, characterized in that flow from said air outlet bypass duct means (62) and gaseous flow from said turbine pass through an area in which said propeller (20) operates, air outlet means (158) being arranged to mix flow from said bypass duct means (62) and gaseous flow from said turbine.

9. Engine according to claim 1, characterized in that said flow control means (42) comprises a forward flow control section (72) having a forward inlet and a rear outlet, an aft flow control section (74) having a forward inlet and a rear outlet, the inlet of the forward flow control section (72) having inner (84) and outer (82) annular ducts, with said inner and outer annular ducts (84, 82) expanding radially toward said outlet so as to be arranged circumferentially adjacent each other and form duct outlets of the forward flow control section (72), said aft flow control section (74) having duct inlets matching in configuration the duct outlets of the forward flow control section (72), the duct inlets of the aft flow control section (74) diminishing in width radially in a rearward direction and terminating in duct outlets of the aft flow control section (74), with the duct outlets of the aft flow control section (74) being arranged in inner and outer sets of duct outlets, means (87) to rotate said forward (72) and aft (74) flow control sections relative to one another.

10. Engine according to claim 1, characterized in that with the flow control means (42) in the first position, flow through the bypass duct (62) relative to flow through the second compressor part has a bypass ratio of about 0,5 to 1,0.

11. Engine according to claim 1, characterized in that said compressor has a low pressure compressor component and a high pressure compressor component, said low pressure compressor component having a compression ratio of about 1,4 to 2,0.

12. Engine according to claim 1, characterized in that the high pressure compressor component has a compression ratio between about 20 and 30.

**Patentansprüche**

1. Turboprop-Triebwerk, umfassend:

einen Kompressor (24), der einen ersten Kompressorteil (38; 34) und einen zweiten Kompressorteil (40+36; 36) stromabwärts von demselben hat;

eine Turbine (26), die betriebsmäßig durch eine Antriebseinrichtung mit dem Kompressor (24) verbunden ist;

einen Verbrennungsabschnitt (28), der so angeordnet ist, daß er eine Luftströmung von dem Kompressor (24) empfängt und Kraftstoff darin verbrennt, so daß er eine gasförmige Strömung zum Antrieb der Turbine (26) liefert;

einen Propeller (20) variabler Steigung, der drehbar angebracht und so positioniert ist, daß er zum Erzeugen eines Schubs gegen Umgebungsluft reagiert;

ein Geschwindigkeitsreduziergetriebe (50), das betriebsmäßig eine Verbindung zwischen der Turbine (26) und dem Propeller (20) zum Antreiben des Propellers mit einer reduzierten Rotationsgeschwindigkeit relativ zu der Turbine bildet;

eine Lufteinlaßeinrichtung (54) zum Leiten eines Lufstroms in das Triebwerk, eine Luftauslaßnebenschlußkanaleinrichtung (62), die so angeordnet ist, daß sie einen Luftstrom liefert, der den zweiten Kompressorteil (40+36; 36), den Verbrennungsabschnitt (28) und die Turbine (26) umgeht;

gekennzeichnet durch

eine Lufteinlaßnebenschlußeinrichtung (58), die so angeordnet ist, daß sie einen Nebenschlußeinlaßluftstrom liefert, der den ersten Kompressorteil (38; 34) umgeht;

eine Strömungssteuereinrichtung (42), die betriebsmäßig so positioniert ist daß sie Luftströmung von der Lufteinlaßnebenschlußeinrichtung (58) und Luftströmung von dem ersten Kompressorteil (38; 34) empfängt und daß sie Luftströmung zu der Luftauslaßnebenschlußkanaleinrichtung (62) und Luftströmung zu dem zweiten Kompressorteil (40+36; 36) leitet, wobei diese Strömungssteuereinrichtung (42) eine erste Position hat, in der Luftströmung von der Lufteinlaßnebenschlußenrichtung (58) zu dem zweiten Kompressorteil (40+36; 36) geleitet und Luftströmung von dem ersten Kompressorteil (38; 34) zu der Luftauslaßnebenschlußkanaleinrichtung (62) gerichtet wird, und eine zweite Position, worin Luftströmung von der Lufteinlaßnebenschlußkanaleinrichtung (58) zu der Luftauslaßnebenschlußkanaleinrichtung (62) geleitet und Luft von dem ersten Kompressorteil (38; 34) zu dem zweiten Kompressorteil (40+36; 36) gerichtet wird.

2. Triebwerk nach Anspruch 1, dadurch gekennzeichnet, daß eine erste und zweite Turbinenstufe (30, 32) und ein erster und zweiter Kompressorabschnitt (34, 36), die betriebsmäßig mit der zweiten (32) bzw. ersten (30) Turbinenstufe verbunden sind, vorhanden sind, wobei der erste Kompressorabschnitt (34) einen vorderen (38) und rückwärtigen (40) Teil hat, wobei die Strömungssteuereinrichtung (42a) betriebsmäßig zwischen dem vorderen und rückwärtigen Teil des ersten Kompressorabschnitts (34) positioniert ist, wodurch der vordere Kompressorteil (38) den ersten Kompressorteil umfaßt und der rückwärtige Kompressorteil (40) zusammen mit dem zweiten Kompressorabschnitt (36) den zweiten Kompressorteil umfaßt.

3. Triebwerk nach Anspruch 1, dadurch gekennzeichnet, daß eine erste und zweite Turbinenstufe (30, 32) vorbanden sind, und ein erster und zweiter Kompressorabschnitt (34, 36), die betriebsmäßig mit, jeweils, der zweiten (32) und ersten (30) Turbinenstufe verbunden sind, wobei die Strömungssteuereinrichtung (42b) betriebsmäßig zwischen den ersten und zweiten Kompressorabschnitt (34, 36) postioniert ist.

4. Triebwerk nuach Anspruch 3, dadurch gekennzeichnet, daß eine dritte Turbinenstufe (122) vorhanden ist, die betriebsmäßig mit dem Geschwindigkeitsreduziergetriebe (50e) verbunden ist.

5. Triebwerk nach Anspruch 1, dadurch gekennzeichnet, daß die Turbine (26) betriebsmäßig mit dem Kompressor (24) durch eine einzige Antriebsverbindung verbunden ist und daß der erste und zweite Kompressorteil beide direkt von der Antriebsverbindung angetrieben sind.

6. Triebwerk nach Anspruch 1, dadurch gekennzeichnet, daß der der Propeller (20) vorwärts von der Lufteinlaßeinrichtung (54) angebracht ist und daß ein Teil der Luftströmung von dem Propeller in die Lufteinlaßeinrichtung geht.

7. Triebwerk nach Anspruch 1, dadurch gekennzeichnet, daß der Propeller (20g) rückwärts von der Turbine angebracth ist und daß das Geschwindigkeitsreduziergetriebe rückwärts von der Turbine positioniert ist (Figure 11).

8. Triebwerk nach Anspruch 7, dadurch gekennzeichnet, daß Strömung von der Luftauslaßnebenschlußkanaleinrichtung (62) und gasförmige Strömung von der Turbine durch einen Bereich geht, in dem der Propeller (20) arbeitet, wobei die Luftauslaßeinrichtung (158) so angeordnet ist, daß sie Strömung von der Nebenschlußkanaleinrichtung (62) und gasförmige Strömung von der Turbine mischt.

9. Triebwerk nach Anspruch 1, dadurch gekennnzeichnet, daß die Strömungssteuereinrichtung (42) einen vorderen Strömungssteuerabschnitt (72) umfaßt, der einen vorderen Einlaß und einen rückwärtigen Auslaß hat, sowie einen hinteren Strömungssteuerabschnitt (74), der einen vorderen Einlaß und einen rückwärtigen Auslaß hat, wobei der Einlaß des vorderen Strömungssteuerabschnitts (72) eine inneren (84) und äußeren (82) ringförmigen Kanal hat, wobei sich der innere und äußere ringförmige Kanal (84, 82) radial nach dem Auslaß zu ausdehnen, so daß sie umfangsmäßig einander benachbart angeordnet sind und Kanalauslässe von dem vorderen Stömungssteuerabschnitt (72) bilden, wobei der hintere Strömungssteuerabschnitt (74) Kanaleinlässe hat, die in der Konfiguration den Kanalauslässen des vorderen Strömungssteuerabschnitts (72) angepaßt sind, wobie sich die Kanaleinlässe des hinteren Strömungssteuerabschnitts (74) in der Breite radial in einer rückwärtigen Richtung verjüngen und in Kanalauslässen des hinteren Stömungssteuerabschnitts (74) enden, wobei die Kanalauslässe des hinteren Strömungssteuerabschnitts (74) in einem inneren und äußeren Satz von Kanalauslässen angeordnet sind, und eine Einrichtung (87) zum Drehen des vorderen (72) und hinteren (74) Strömungssteuerabschnitts relativ zueinander.

10. Triebwerk nach Anspruch 1, dadurch gekennzeichnet, daß, wenn sich die Strömungssteuereinrichtung (42) in der ersten Position befindet, die Strömung durch den Nebenschlußkanal (62) relativ zu der Strömung durch den zweiten Kompressorteil ein Nebenschlußverhältnis von etwa 0,5 bis 1,0 hat.

11. Triebwerk nach Anspruch 1, dadurch gekennzeichnet, daß der Kompressor ein Niedrigdruckkompressorkomponente und eine Hochdurckkompressorkomponente hat, wobei die Niedrigdruckkompressorkomponente eine Kompressionsverhältnis von etwa 1,4 bis 2,0 hat.

12. Triebwerk nach Anspruch 1, dadurch gekennzeichnet, daß die Hochdruckkompressorkompente ein Kompressionsverhältnis zwischen etwa 20 und 30 hat.

**Revendications**

1. Turbopropulseur comprenant:
un compresseur (24) ayant une première partie (38; 34) de compresseur et une seconde partie (40+36; 36) de compresseur placée en aval,
une turbine (26) raccordée lors du fonctionnement au compresseur (24) par un dispositif d'entraînement,
une section (28) de combustion destinée à recevoir le courant d'air du compresseur (24) et à brûler un carburant afin qu'un courant de gaz soit formé et entraîne la turbine (26),
une hélice (20) à par variable montée et disposée afin qu'elle puisse tourner et réagir contre l'air ambiant en créant une poussée,
une transmission (50) de réduction de vitesse raccordée lors du fonctionnement entre la turbine (26) et l'hélice (20) afin qu'elle entraîne l'hélice à une vitesse réduite de rotation par rapport à la turbine, et
un dispositif (54) d'entrée d'air destiné à diriger un courant d'air dans le moteur, et
un dispositif (62) à conduit de dérivation de sortie d'air destiné à former un courant d'air qui passe en dérivation par rapport à la seconde partie de compresseur (40+36; 36), à la section de combustion (28) et à la turbine (26),
caractérisé par:
un dispositif (58) de dérivation d'entrée d'air destiné à former un courant d'air d'entrée de dérivation qui passe en dérivation par rapport à la première partie de compresseur (38; 34),
un dispositif (42) de réglage de circulation placé lors du fonctinnement de manière qu'il reçoive le courant d'air provenant du dispositif (58) de dérivation d'entrée d'air et un courant d'air provenant de la première partie de compresseur (38; 34), et destiné à diriger un courant d'air vers le dispositif (62) à conduit de dérivation de sortie d'air et un courant d'air vers la seconde partie de compresseur (40+36; 36), le dispositif (42) de réglage de circulation ayant une première position dans laquelle un courant d'air provenant du dispositif (58) de dérivation d'entrée d'air est dirigé vers la seconde partie de compresseur (40+36; 36) et un courant d'air provenant de la première partie de compresseur (38; 34) est dirigé vers le dispositif (62) à conduit de dérivation de sortie d'air, et une seconde position dans laquelle un courant d'air provenant du dispositif (58) à counduit de dérivation d'entrée d'air est dirigé vers le dispositif (62) à conduit de dérivation de sortie d'air et l'air provenant de la première partie de compresseur (38; 34) est dirigé vers la seconde partie de compresseur (40+36; 36).

2. Moteur selon la revendication 1, caractérisé en ce qu'il comporte un premier et un second étage de turbine (30, 32) et une première et une seconde section de compresseur (34, 36) raccordées lors du fonctionnement au second (32) et au premier (30) étage de turbine respectivement, la première section de compresseur (34) ayant des parties ayant (38) et arrière (40), le dispositif (42a) de réglage de circulation étant disposé entre les parties avant et arrière de la première section de compresseur (34), si bien que la partie avant (38) de compresseur est la première partie de compresseur, et la partie arrière (40) de compresseur, avec la seconde section de compresseur (36) forment la seconde partie de compresseur.

3. Moteur selon la revendication 1, caractérisé en ce qu'il comporte un premier et un second étage de turbine (30, 32) et une première et une seconde section de compresseur (34, 36) raccordée lors du fonctionnement respectivement au second étage (32) et au premier étage (30) de turbine, le dispositif (42b) de réglage de circulation étant disposé lors du fonctionnement entre la première et la seconde section de compresseur (34, 36).

4. Moteur selon la revendication 3, caractérisé en ce qu'il comporte un troisième étage (122) de turbine raccordé à la transmission (50e) destinée à réduire la vitesse.

5. Moteur selon la revendication 1, caractérisé en ce que la turbine (26) est raccordée au compresseur (24) par une connexion directe, et la première et la seconde partie de compresseur sont toutes deux entraînées directement par cette connexion.

6. Moteur selon la revendication 1, caractérisé en ce que l'hélice (20) est montée en avant du dispositif (54) d'entrée d'air et une partie du courant d'air provenant de l'hélice pénètre dans le dispositif d'entrée d'air.

7. Moteur selon la revendication 1, caractérisé en ce que l'hélice (20g) est montée en arrière de la turbine, et la transmission de réduction de vitesse est placée en arrière de la turbine (figure 11).

8. Moteur selon la revendication 7, caractérisé en ce que le courant provenant du dispositif (62) à conduit de dérivation de sortie d'air et le courant de gaz provenant de la turbine passent dans une zone dans laquelle agit l'hélice (20), le dispositif (158) de sortie d'air étant destiné à mélanger le courant provenant du dispositif (62) à conduit de dérivation et le courant de gaz provenant de la turbine.

9. Moteur selon la revendication 1, caractérisé en ce que le dispositif (42) de réglage de circulation comporte une section avant (72) de réglage de circulation qui comporte une entrée à l'avant et une sortie à l'arrière, une section arrière (74) de réglage de circulation ayant une entrée à l'avant et une sortie à l'arrière, l'entrée de la section avant (72) ayant des conduits annulaires interne (84) et externe (82), les conduits annulaires interne et externe (84, 82) s'élargissant radialement vers la sortie de manière qu'il soient adjacents mutuellement en direction circonférentielle et qu'ils forment des sorties de conduit de la section avant (72) de réglage de circulation, la section arrière (74) de réglage de circulation ayant des entrées de conduit de configuration complémentaire de celle des sorties de conduit de la section avant (72) de réglage de circulation, les entrées des conduits de la section arrière (74) ayant une largeur qui diminue radialement vers l'arrière et aboutissant à des sorties de conduit de la section arrière (74), les sorties de conduit de la section arrière (74) étant disposées par jeux internes et externes de sorties de conduit, un dispositif (87) étant destiné à faire tourner les sections avant (72) et arrière (74) de réglage de circulation l'une par rapport à l'autre.

10. Moteur selon la revendication 1, caractérisé en ce que, lorsque le dispositif (42) de réglage de circulation est dans sa première position, le courant circulant dans le conduit de dérivation (62) présente un rapport de dérivation compris entre environ 0,5 et 1,0 avec le courant circulant dans la seconde partie de compresseur.

11. Moteur selon la revendication 1, caractérisé en ce que le compresseur a un élément de compresseur à basse pression et un élément de compresseur à haute pression, l'élément de compresseur à basse pression ayant un rapport de compression compris entre environ 1,4 et 2,0.

12. Moteur selon la revendication 1, caractérisé en ce que l'élément de compresseur à haute pression a un rapport de compression compris entre environ 20 et 30.

*FIG. 1 A*

0 156 933

FIG. 1B

0 156 933

FIG. 2

FIG. 3

FIG. 5

FIG. 6

FIG. 4

FIG. 7

FIG. 8a

FIG. 8c

FIG. 8b

FIG. 8d

FIG. 9

0 156 933

FIG. 10

*FIG. 11*